# EUROPÄISCHE PATENTANMELDUNG

(11) **EP 4 137 543 A1**
(43) Veröffentlichungstag der Anmeldung: **22.02.2023**
(21) Anmeldenummer: 22184074.7
(22) Anmeldetag: 11.07.2022
(51) Int. Cl.: C08L 63/00, C08G 59/24, C08G 59/50, C08G 59/40

(54) **ZUSAMMENSETZUNG ZUR HERSTELLUNG EINES FLÄCHIGEN HALBZEUGS**

(30) Priorität: 19.08.2021 DE 102021121497
(71) Anmelder: Fraunhofer-Gesellschaft zur Förderung der angewandten Forschung e.V., 80686 München (DE)
(72) Erfinder: Köhler, Mathias, 12167 Berlin (DE); Uhlig, Christoph, 12487 Berlin (DE); Klauke, Karina, 15713 Königs Wusterhausen (DE); Koschek, Katharina, 28357 Bremen (DE); Boskamp, Laura, 28357 Bremen (DE)
(74) Vertreter: Weisse, Renate

(57) **Zusammenfassung**

Eine Zusammensetzung zur Herstellung eines flächigen Halbzeugs enthaltend einen zu einem Duroplast härtbaren Reaktivharz in Form eines Polyadditionsharzes oder einen mittels Ringöffnungspolymerisation härtbaren Reaktivharz; und einen bei einer ersten Temperatur dem Reaktivharz hinzugefügten einphasig mischbaren Thermoplast; ist dadurch gekennzeichnet, dass das Reaktivharz und/oder ein bei einer zweiten Temperatur der Reaktivharz-Thermoplast-Masse hinzugefügter Härter latent ist. Mit der Zusammensetzung kann ein freistehend handhabbares Halbzeug hergestellt werden.

## Beschreibung

### Technisches Gebiet

Die Erfindung betrifft eine Zusammensetzung zur Herstellung eines flächigen Halbzeugs enthaltend
(a) einen zu einem Duroplast härtbaren Reaktivharz in Form eines Polyadditionsharzes oder einen mittels Ringöffnungspolymerisation härtbaren Reaktivharz; und
(b) einen bei einer ersten Temperatur dem Reaktivharz hinzugefügten einphasig mischbaren Thermoplast.

Die Erfindung betrifft ferner ein Verfahren zur Herstellung eines Produkts aus einer solchen Zusammensetzung und ein flächiges Halbzeug.

Duroplaste, auch als Duromere bezeichnet, sind Polymere, die aus einem Reaktivharz unter Vernetzung aushärten. Der Vernetzungsprozess wird je nach Reaktivharz, der das Ausgangsmaterial bildet, durch Härter, Strahlung oder durch hohe Temperaturen ausgelöst. Thermoplaste bestehen aus linearen, unvernetzten Polymerketten.

### Stand der Technik

Zur Herstellung von beispielsweise Leichtbauteilen sind Faserverbundkunststoffe (FVK) bekannt. FVK zeichnen sich durch Bauteilsteifigkeit, Chemikalien- und Korrosionsbeständigkeit sowie geringes Gewicht gegenüber Stahl aus. Fasern, beispielsweise Glas- oder Kohlenstofffasern, werden in einer Matrix aus Reaktivharz eingebettet. Es existieren unterschiedliche Verfahren zur Imprägnierung der Verstärkungsfasern in Form von textilen Halbezeugen. Dazu gehören unter anderem Vakuuminfusion, Vakuuminjektion und Handlaminat. Faserrovings, auch als Pultrusion bezeichnet, ist möglich. Die Herstellung von Bauteilen kann mit der Prepreg-Technologie erfolgen. Bei der Prepreg-Technologie wird das FVK-Bauteil in zwei Schritten gebildet. Die zwei Schritte können räumlich auseinanderliegen und von verschiedenen Firmen oder in verschiedenen Branchen ausgeführt werden. Im ersten Schritt werden die trockenen Fasern oder Fasertextile mit Harz imprägniert. Dieses vorimprägnierte Fasertextil wird als Prepreg bezeichnet. Das Prepreg wird kühl gelagert. Es wird kühl zum Endanwender transportiert. Beim Endanwender wird es wieder kühl gelagert. Das FVK wird dann durch schichtweisen Lagenaufbau, auch als Laminieren bezeichnet, dieser Prepregs erhalten. Das FVK wird in Heizpressen, Vakuumaufbauten oder Autoklaven komprimiert und ausgehärtet.

Faserverstärkte Kunststoffe erreichen durch die Faserverstärkung hohe spezifische, gewichtsbezogene Steifigkeiten und Festigkeiten. Sie werden daher überall dort eingesetzt, wo ein geringes Gewicht bei hoher Steifigkeit und Festigkeit wichtig ist. Die anisotropen Eigenschaften faserverstärkter Kunststoffe können auch gezielt für eine lastgerechte Auslegung genutzt werden.

Typischerweise werden faserverstärkte Kunststoffe in Sportgeräten, Flugzeugen, Hubschraubern, Weltraumsatelliten, Rotorblättern für Windenergie-Anlagen sowie in Automobilen, Schienenfahrzeugen, Booten und Schiffen eingesetzt.

Die faserverstärkten Kunststoffe können eine thermoplastische oder eine duroplastische Matrix aufweisen. Derzeit eingesetzte Bauteile aus Faserverbundkunststoffen weisen überwiegend eine duroplastische Kunststoff-Matrix auf. Duroplaste werden durch Härten aus Reaktivharzen hergestellt. Im High-Performance-Teil, beispielsweise im Sport oder in der Luftfahrt werden vorrangig Epoxidharze eingesetzt.

Duroplaste weisen gegenüber Thermoplasten als Matrix deutliche Vorteile auf. Sie haben im ungehärteten Zustand niedrigere Viskositäten, benetzen daher die Fasern besser und führen zu besseren Faser-Matrix-Anbindungen. Sie erfordern geringere Temperaturen und Drücke für Formgebung und Aushärtung als Thermoplast-Matrix-Kunststoffe. Sie haben im gehärteten Zustand höhere E-Moduli, Wärmeformbeständigkeiten und Festigkeiten.

Bisherige Herstellungstechnologien für duroplastische Faserverbundkunststoffe sind nicht ausreichend wirtschaftlich. Infusionstechnologien wie RTM (Resin Transfer Moulding) und Vakuuminfusion erfordern das manuelle Einlegen oder Fixieren der Fasertextilien. In vielen Fällen ist ein Binder zu deren Fixierung nötig. RTM erfordert teure Formwerkzeuge. RTM ist daher nur für hohe Stückzahlen wirtschaftlich.

Prepreg-Technologien haben diese Nachteile nicht. Herstellung, Lagerung und Transport von Prepregs sind jedoch teuer. Es fehlen bisher kostengünstige Verfahren für duroplastische FVK, die vorteilhaften Merkmale der Prepreg-Technologie beim Laminieren, Pressen und Härten ermöglichen, ohne dass hierfür in einem vorherigen Schritt aufwendig und an einem separaten Produktionsstandort Prepregs gefertigt werden. Dazu gehören ein hoher und überall gleichmäßiger Faservolumengehalt, gleichmäßige Lagenabstände, der Verzicht auf Binder oder Fixierungen durch Nähfäden und die definierte Vorgabe der Faserausrichtung für jede Lage.

Ein weiteres Problem duroplastischer FVK ist, dass die Faser-Textilstruktur, d.h. das Gewebe, Gelege oder die unidirektionale Verstärkung eine Topografie bildet, die sich an der Oberfläche abzeichnen und Unebenheiten verursachen kann. Um das Leichtbaupotential der Faser voll auszunutzen, wird der Faseranteil maximiert und der Harz-Anteil minimiert. Dadurch wird das Risiko erhöht, dass Fasern an den Oberflächen freiliegen.

Dies führt zu einer unerwünschten Beeinträchtigung des Erscheinungsbildes. Beispielsweise bei Windenergie-Rotorblättern, Flugzeugen oder Hubschraubern können Unebenheiten negative aerodynamische Auswirkungen haben.

Freiliegende Fasern können ferner die Haltbarkeit des Bauteils beeinträchtigen. Fasern, die aus dem Verbund herausragen, lassen Feuchtigkeit entlang der Faser-Matrix-Grenzfläche ins Innere des Bauteils gelangen. Beispielsweise durch Eisbildung kann solche Feuchtigkeit den Faser-Matrix-Verbund vorzeitig sprengen. Offenliegende, ungeschützte Fasern beeinträchtigen die Abriebfestigkeit, z.B. gegenüber Umwelteinflüssen wie Sandstürmen und Ähnlichem.

Eine harzreiche Oberflächenschicht deckt die darunter liegenden Faserlagen ab und schützt diese. Außerdem bildet eine harzreiche Oberflächenschicht eine optisch oder aerodynamisch hochqualitative Oberfläche. Es ist daher bekannt, eine Oberflächenharz-Schicht in Form von sogenannten Gelcoats aufzubringen. Gelcoat-Formulierungen werden spezifisch für alle gängigen Harzklassen, wie beispielsweise Epoxidharze, UP-Harze, Vinylesterharze angeboten.

Nachteilig bei der Verwendung von Gelcoats ist es, dass sie in Formen gespritzt oder mit Rollen als Streichauftrag aufgebracht werden müssen. Anschließend werden die Prepreglagen eingelegt. Der Gelcoat-Auftrag erfolgt manuell. Das ist zeitaufwendig und unterliegt Schwankungen. Es können Lufteinschlüsse und Dickenschwankungen auftreten. Gelcoats werden auch bei Infusionstechniken in ähnlicher Weise angewendet.

Das Gelcoat wird in einem ersten Schritt vor Einlegen nachfolgender Prepreglagen angehärtet. Dadurch wird erreicht, dass die Molmasse des Harzes durch Präpolymerisation erhöht wird. Eine höhere Molmasse bewirkt einer höhere Viskosität des Gelcoats. Die Viskosität reicht aus, um ein Durchdrücken der Faserlagen zu vermeiden und eine Vermischung mit den anliegenden, harzgetränkten Prepregs gering zu halten.

Für eine gewisse Durchmischung und Anbindung an die angrenzenden Prepregschichten darf der Gelcoat noch nicht geliert sein. Das Präpolymerisieren bildet einen zeit- und energieaufwändigen, zusätzlichen Fertigungsschritt von mehrere Stunden. Prozessschwankungen führen ferner zu Qualitätsschwankungen.

Aus US2001/0194942A1, US2009/0252916A1, US2018/0043637A1 und US2020/0339773A1 sind harzreiche, Prepreg-artige Deckschichten bekannt, die wie ein Prepreg gehandhabt werden und als unterste Lage in eine Form eingelegt werden. Diese sollen den flüssigen Gelcoat-Auftrag ersetzen.

Bei diesem Stand der Technik wird die textile Verstärkungsschicht optimiert. Die textile Verstärkungsschicht ist in jedem Fall erforderlich, weil die für diese harzreichen, Prepreg-artigen Deckschichten eingesetzten, hot-melt-artigen Harzformulierungen mechanisch nicht ausreichend belastbar sind. Die Deckschichten müssen daher durch eine textile Struktur, z.B. ein Vlies wie in US 2009/0252916 A1 und US2018/0043637 A1 offenbart, verstärkt werden. Die textile Struktur führt zu einem unerwünschten Mehrgewicht.

Die textile Verstärkungsschicht dient als Trägerschicht für die harzreiche Deckschicht. Dadurch wird die Festigkeit der Deckschicht im ungehärteten Zustand erhöht. Die höhere Festigkeit ermöglicht es, die Deckschicht in eine Form einzulegen. Es wird eine gute Handhabbarkeit im ungehärteten Zustand erreicht. Für die Tragfähigkeit der Struktur im gehärteten Zustand wird die textile Verstärkungsschicht nicht benötigt. Die Tragfähigkeit wird allein durch die Gewebe-, Gelege- oder unidirektionale Verstärkung der darunterliegenden Prepregs oder die bei Infusion verwendeten Faserlagen erzielt.

Zusätzliches Gewicht ergibt sich dadurch, dass die textile Verstärkung der harzreichen Deckschichten mit Harz durchtränkt werden müssen. Die Deckschichten enthalten mehr Harz als für die eigentliche Funktion, nämlich die Abdeckung der darunterliegenden Prepregs, nötig wäre.

EP 2 768 905 B1 offenbart die Kombination von Duroplasten, Thermoplasten und leitfähigen Nanofüllstoffen. Es werden keine Pulver für elektrische Leitfähigkeit oder mit erhöhter Zähigkeit im Bulk beschrieben.

EP 2 739 672 B1 offenbart ebenfalls die Kombination von Duroplasten und Thermoplasten, wobei der Thermoplast eine aromatische Verbindung mit einem TG über 150°C darstellt.

WO 2016/166166 A1 offenbart die Verwendung einer Deckschicht, die ausschließlich aus Thermoplast besteht und als Entformungsmittel dient, wobei ein porösere Thermoplast als Vlies eingesetzt wird und nicht einphasig eingemischt vorliegt.

EP 2 285 879 B1 offenbart eine Mischung von Thermoplasten und Duroplasten, bei denen sich die Phase des thermoplastischen Polymerharzes bei der Härtung von dem duroplastischen Polymerharz separiert. Die Masse bleibt also nicht homogen. Zusätzlich handelt das Patent von der Modifikation von duroplastischen Polymerharzen mit elektrisch leitfähigen Carbonanofibers.

DE 690 27 295 T2 offenbart eine wärmehärtbare Mischung, die bei einer Temperatur im Bereich von 20°C bis 100°C flüssig ist. Eine solche Mischung ist bei Raumtemperatur nicht fest und für die Herstellung von Halbzeugen ungeeignet. WO 2013/122847 A1 offenbart eine faserhaltige Dispersion.

Aus EP2345528 A2, US 2020/0361189 A1 und DE 198 54 883 Al sind thermoplastische Folien als oberste Deck- und Schutzschicht bekannt. Thermoplast-Folien haben mehr als ausreichende E-Moduli und Festigkeiten. Eine textile Verstärkung ist bei diesen Folien nicht erforderlich. Nachteilig ist es bei den bekannten Folien, dass sie bei Raumtemperatur nicht flexibel genug sind. DE 198 54 883 Al offenbart das Vorformen der Folien bei erhöhter Temperatur und erhöhtem Druck, um sie an die gewünschte Form anzupassen.

Nachteilig ist es ferner, dass technische Thermoplaste nicht mit den darunterliegenden Harzschichten mischbar sind. Die Anbindung erfolgt nur durch Adhäsion zwischen Harz und Thermoplast. In EP2345528 A2 wurde eine Kombination von im Harz löslichen und unlöslichen Thermoplasten verwendet. Ein kontinuierlicher Übergang in der Kompatibilität des Thermoplasten zum Harz wurde nicht erhalten. Das lösliche Thermoplast kann sich mit dem Harz verbinden und sich in diesem zumindest teilweise lösen. Die Anbindung der unlöslichen Thermoplast-Folie wird dadurch nicht verbessert. Auch kann sich das lösliche Thermoplast zu langsam im Harz lösen. Prozesse wie insitu-Auflösungen von hochmolekularen Thermoplasten sind stark zeit- und temperaturabhängig und daher empfindlich gegenüber häufig unvermeidlichen Prozess-Schwankungen.

### Offenbarung der Erfindung

Es ist Aufgabe der Erfindung, die Nachteile des Standes der Technik zu überwinden und ein Material für die Herstellung glatter Oberflächen zu finden, das kostengünstig in der Herstellung ist und sich gut lagern, transportieren und handhaben lässt.

Erfindungsgemäß wird die Aufgabe gelöst durch eine Zusammensetzung der eingangs genannten Art gelöst, welche dadurch gekennzeichnet ist, dass
(c) das Reaktivharz und/oder ein bei einer zweiten Temperatur der Reaktivharz-Thermoplast-Masse hinzugefügter Härter latent ist und
(d) die Mischung während der Härtung einphasig bleibt.

Das umfasst insbesondere, dass ein verwendetes Reaktivharz als monohärtendes Harz latent ist oder eine Harz-Härter-Mischung latent ist. Das Halbzeug kann insbesondere faserfrei und bei 25 °C fest sein und eine freistehend handhabbare Folie bilden.

Die Aufgabe wird gelöst durch Zusammensetzungen, bei denen der Thermoplast einphasig mischbar hinzugefügt wurde und die Mischung einphasig bleibt. Die Zusammensetzung ist also keine mehrphasige, sondern eine homogene Masse. Bei der Aushärtung tritt keine Phasenseparation auf.

Als "latent" wird eine Harz-Härter-Mischung oder ein monohärtendes Harz verstanden, welches bei Raumtemperatur keine oder eine nur sehr langsame Vernetzungsreaktion zeigt und erst oberhalb 80 °C schnell, beispielsweise etwa in der Größenordnung von 1 h, härtet. Die Vernetzungsreaktion kann bei erhöhten Temperaturen innerhalb von in der Industrie prozesstypischen Härtungszeiten erfolgen. Vorzugsweise ist dabei vorgesehen, dass der Masseanteil des Thermoplasts geringer ist, als der Masseanteil des Reaktivharzes.

Die Zusammensetzung ermöglicht eine Herstellungstechnologie für duroplastische Faserverbundkunststoffe, die auf einfache Weise das Stapeln, Fixieren und Durchtränken der Faserlagen ermöglicht, ohne dass hierfür die Kostennachteile der Prepreg-Herstellung in Kauf genommen werden müssen.

Mit der erfindungsgemäßen Zusammensetzung kann ein härtbares, selbsttragendes und freistehend handhabbares Halbzeug in Form eines flächigen Materials erzeugt werden, die in ihren Eigenschaften zwischen reinem Thermoplast und ungehärtetem, unmodifizierten Harz-Härter-Gemisch liegt. Das flächige Material, etwa ein Film oder eine Folie, weist im ungehärteten Zustand ausreichende Festigkeiten auf, um manuell oder durch einen Automaten präzise in eine Form eingelegt werden zu können. Es hat ferner ausreichend Tack (Klebrigkeit). Das ermöglicht es, dass nachfolgend eingelegte Prepregschichten anhaften können.

Ein mit einer erfindungsgemäßen Zusammensetzung erzeugtes, flächiges Material weist beim Aufheizen auf die Härtungstemperatur und in der isothermen Härtungsphase eine ausreichend hohe Viskosität auf, so dass sich Faserlagen nicht zur Oberfläche durchdrücken können. Gleichzeitig ist die erfindungsgemäße Zusammensetzung vollständig mischbar mit den darunterliegenden Prepreg-Harzschichten. Das Material kann in die Prepreg-Harzschicht einreagieren. Dadurch wird nach der Härtung eine optimale Anbindung ohne Eigenschafts-Gradient zwischen Oberflächenmaterial und den darunterliegenden Harzschichten der Prepreglagen erreicht.

Mit der erfindungsgemäßen Zusammensetzung kann das Material abwechselnd mit Faserlagen gestapelt und gehärtet werden. Zum Beispiel können Gewebe oder unidirektional ausgerichtete Faserbänder eingelegt werden. Dies ermöglicht eine gegenüber der Prepreg-Technologie kostengünstigere Herstellung. Die Harzfolien sind zugleich härtbar, im unausgehärteten Zustand ausreichend belastbar und mit ausreichendem Tack ausgestattet.

Um eine derartige Konsistenz zu erreichen und gleichzeitig Härtbarkeit sowie Mischbarkeit mit benachbarten ungehärteten Epoxidharzlagen zu erreichen, werden erfindungsgemäß geeignete Kombinationen aus Reaktivharz, d.h. Epoxidharz-Monomeren, in diesen gut löslichen Thermoplasten und latente Härter oder monohärtende Harze verwendet. Die Reaktivharz-Komponente bewirkt die Durchdringbarkeit und Mischbarkeit mit benachbarten Epoxidharzschichten. Der latente Härter bewirkt zusammen mit benachbarten Epoxidharzschichten die Härtbarkeit bei höheren Temperaturen und ausreichende Verarbeitungszeit des ungehärteten Zustandes bei Raumtemperatur. Längere Lagerungszeiten können bei tieferen Temperaturen erreicht werden. Die Thermoplast-Komponente bewirkt die Viskositätserhöhung sowie die Handhabbarkeit und Belastbarkeit der Folien im ungehärteten Zustand.

Anders als bei bekannten Mischungen aus Epoxidharzen und Thermoplasten, die vorrangig zur Erhöhung der Schadenstoleranz bei in der Luftfahrt eingesetzt werden, ist bei der vorliegenden Erfindung die Zielrichtung nicht die Bewahrung einer hohen Glasübergangstemperatur der Duroplast-Thermoplast-Mischung oder die Erzeugung einer phasenseparierten Struktur im gehärteten Zustand zur Zähigkeitserhöhung. Die vorliegende Erfindung sieht gut mit dem Epoxidharz mischbare und damit leicht einmischbare Thermoplasten vor, mit denen insbesondere bei Raumtemperatur stabile Mischungen erzeugt werden können. Die thermoplast-modifizierten Epoxid-Materialien sind ausreichend hochmolekular und belastbar für die in dieser Erfindung angestrebte Handhabbarkeit der härtbaren Folien.

Anders als bei Prepregs handelt es sich bei den erfindungsgemäßen Zusammensetzungen um ein faserfrei freistehend handhabbares Material, das ohne Stütz- oder Trennmaterial handhabbar ist. Es muss keine Trennfolie mit durch eine Anlage laufen. Trennfolien können zwar auch zum Aufwickeln und zum Transport dienen, sind aber zum Ablegen des Materials, beispielsweise eines Films oder einer Folie nicht unbedingt erforderlich.

Je nach Materialauswahl ist es vorteilhaft, wenn die erste und/oder die zweite Temperatur oberhalb der Raumtemperatur liegt. Beim Aufheizen auf eine Härtungstemperatur und in der isothermen Härtungsphase sind die Harzmaterialien so niedrig viskos, dass trockene Faserlagen durchdrungen werden können. Benachbarte Harzfilme oder -folien verbinden sich dabei miteinander durch gegenseitige Durchmischung. Es wird durch Vernetzung ein homogenes dreidimensionales Netzwerk ähnlich wie in der Prepreg- und Infusionstechnologie aufgebaut.

Bei einer weiteren Ausgestaltung der Erfindung ist vorgesehen, dass die zweite Temperatur, bei welcher der Härter zugefügt wird, geringer ist, als die erste Temperatur, bei welcher der Thermoplast hinzugefügt wird. Dann bleibt die Viskosität hoch und die Form erhalten.

Ein Härter kann in Pulverform hinzugefügt werden. Es versteht sich, dass auch jede andere Form geeignet sein kann. Auch können monohärtende Harze ohne Härter eingesetzt werden.

Bei pulverförmigen Härtern ist es vorteilhaft, wenn die zweite Temperatur derart ausgewählt ist, dass das Gemisch eine ausreichend geringe Viskosität aufweist, welche ein Dispergieren des pulverförmigen Härters ermöglicht und gleichzeitig unterhalb der Temperatur liegt, bei welcher der Härter sich in dem Gemisch löst und das Gemisch aushärtet. Die Zusammensetzung kann vor dem Abkühlen gerakelt oder auf andere Weise in eine flächige Form gebracht werden.

Je nach Verwendungszweck kann vorgesehen sein, dass das aus der Zusammensetzung hergestellte, flächige Material auf einer Trennfolie oder einem Trennpapier abgelegt ist. Dadurch kann insbesondere ein Aufrollen oder Stapeln ermöglicht werden. Auch wird die Oberfläche beispielsweise vor Verunreinigung geschützt. Die Handhabung des Materials ist aber auch ohne Trennfolie oder Trennpapier möglich.

Bei einer konkreten Ausgestaltung der Erfindung ist das Reaktivharz ausgewählt aus einer Gruppe enthaltend Epoxidharze, insbesondere Bisphenol A diglycidyl ether (DGEBA), Bisphenol F diglycidyl ether (DGEBF), Tetraglycidylmethylendianilin (TGMDA), triglycidyl-p-aminophenol (TGPAP) und Benzoxazinharze, insbesondere Bisphenol-A und Anilin basiertes 1,3-Benzoxazin, Bisphenol-F und Anilin-basiertes Benzoxazin, Cyanatester, insbesondere Dicyanatester des Bisphenol M, Bisphenol A und Bisphenol E, sowie Novolak-basierte Cyanatester oder deren Mischungen oder Derivate.

Der Thermoplast kann insbesondere hochmolekular sein und vorzugsweise ausgewählt sein aus einer Gruppe enthaltend Polyphenoxy, Polysulfone, Polyethersulfone Polyacrylate, Polymethacrylate, Polyoxazoline, substituierte Polyolefine (z.B. Polyvinylpyrrolidon), Polyester (z.B. Polyethylenterephthalat), Polyamide (z.B. Polyamid 12, Polyamid 10, Polyamid 612), Polycarbonate (z.B. Polybisphenol A carbonat, Polypropylencarbonat, Polyethylencarbonat), Polyimide, Polyetherimide, oder deren Mischungen oder Derivaten daraus.

Der Härter kann ausgewählt sein aus einer Gruppe enthaltend Dicyandiamid (DiCy), 4,4'-Diaminodiphenylsulfon (DDS), 4,4'-Diaminodiphenylmethan (MDA), 4,4'-methylenebis-(2,6-diisopropyl)-anilin (MDIPA), 4,4'-methylenebis-(2,6-diethyl)-anilin (MDEA), 3,3'-Diisopropyl-5,5'-dimethyl-4,4'-diaminodiphenylmethan (MMIPA), 4,4'-Methylene-bis (3-chloro-2,6-diethylanilin) (MCDEA) oder deren Mischungen oder Derivaten daraus.

Die erfindungsgemäße Zusammensetzung ermöglicht das Beladen mit funktionalen Füllstoffen. Das Einbringen von funktionalen Füllstoffen wird sowohl in die Oberflächenschicht als auch in Zwischenschichten zwischen zwei benachbarten Faserlagen ermöglicht. Auf diese Weise können die den Funktionalitäten, wie z.B. Flammschutz, entsprechenden Füllstoffe ideal in den Ebenen eines Verbundes platziert werden. Dort können sie ihre optimale Wirkung entfalten. Eine besonders vorteilhafte Ausgestaltung der Erfindung sieht daher vor, dass flammhemmende Stoffe, Keramik-Partikel, blähende Partikel oder andere funktionale Füllstoffe enthalten sind.

Derartige funktionale Füllstoffe können verschiedene Funktionen wie Flammschutz, Barrierewirkung und vieles andere mehr in den Werkstoff einbringen.

Die erfindungsgemäße Aufgabe wird auch durch ein Verfahren zur Herstellung eines Halbzeugs oder Produktes aus der oben beschriebenen, erfindungsgemäßen Zusammensetzung gelöst, bei dem aus der Zusammensetzung ein faserfreies, freistehend handhabbares Halbzeug hergestellt wird.

Dabei kann das Reaktivharz und der Thermoplast in einem temperierbaren Gefäß mit Rührern oder in einem Extruder, insbesondere einem Doppelschneckenextruder, gemischt werden und der Härter vor dem Extruderausgang zugefügt werden. Insbesondere kann die Zusammensetzung mittels Filmextrusion zu einer Folie verarbeitet werden

Ein aus der Zusammensetzung hergestelltes flächiges Halbzeug kann insbesondere vor dem Aushärten gelagert, bearbeitet und transportiert werden.

Je nach Anwendung können mehrere Lagen vor dem Aushärten übereinandergelegt werden. Dabei kann vorgesehen sein, dass zwischen wenigstens zwei der übereinandergelegten Lagen jeweils eine Faserlage angeordnet ist.

Bei einer Ausgestaltung der Erfindung ist vorgesehen, dass zwischen wenigstens zwei der übereinandergelegten Lagen eine elektrische Schaltung und/oder ein Sensor angeordnet ist. Alternativ oder zusätzlich dazu kann das flächige Halbzeug als Träger für eine elektrische Schaltung und/oder einen Sensor dienen.

Auch kann vorgesehen sein, dass das flächige Halbzeug als Oberflächenfilm auf ein Prepreg aufgebracht wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen und den einschlägigen Internetseiten und Publikationen, insbesondere lexikalischer Art, beispielsweise www.Wikipedia.de, www.wissen.de oder der Wettbewerber, forschenden Institute, Universitäten und Verbände, dargelegt sind. Insbesondere haben die verwendeten Begriffe nicht die gegenteilige Bedeutung dessen, was der Fachmann den obigen Publikationen entnimmt.

### Kurze Beschreibung der Zeichnungen

- Fig. 1: ist eine schematische Darstellung des Herstellungsprozesses einer härtbaren Harzfolie im Labormaßstab.
- Fig.2: zeigt Spannungs-Dehnungs-Kurven für den ungehärteten, auf 2 mm gerakelten Folie aus DEGEBA/DDS mit 12,5 Teilen Poly(2-ethyl-2-oxazoline) bei einer Lagerung von 2h bei Raumtemperatur.
- Fig.3: zeigt Spannungs-Dehnungs-Kurven für den ungehärteten, auf 2 mm gerakelten Folie aus DEGEBA/DDS mit 12,5 Teilen Poly(1-vinylpyrrolidone-co-vinylacetat) bei einer Lagerung von 2h bei Raumtemperatur.
- Fig.4: zeigt DSC Kurven der Harzformulierung aus einem ersten Ausführungsbeispiel.
- Fig.5: illustriert die Verwendung von Harzfolien in Verbindung mit Formen.
- Fig.6: ist eine schematische Darstellung der Herstellung einer gehärteten Reinharzprobe für DMA-Messungen durch Stapeln der ungehärteten Folie.
- Fig.7: zeigt die Ergebnisse von DMA Messungen von DEGEBA/DDS mit 12,5 Teilen Poly(1-vinylpyrrolidone-co-vinyl acetat).
- Fig.8: zeigt die Ergebnisse von DMA Messungen von DEGEBA/DDS mit 12,5 Teilen Poly(2-ethyl-oxazoline).
- Fig.9: ist eine schematische Darstellung des Einsatzes einer härtbaren, freistehenden Harzfolie als Oberflächenfolie zur Erzeugung harzreicher Oberflächenschichten mit guter gegenseitiger Durchdringung zu den darunter befindlichen Prepreglagen.
- Fig.10: illustriert den Einsatz eines härtbaren, freistehenden Harzfolie für einen Laminataufbau bei welchem Harzfolien und trockene Faserlagen abwechselt gestapelt werden.
- Fig.11: ist eine schematische Darstellung und illustriert das gezielte Einbringen funktionaler Füllstoffe in Deckschichten und interlaminaren Zwischenschichten durch einen härtbaren, mit funktionalen Füllstoffen gefüllten Harzfolie.
- Fig.12: illustriert die Verwendung einer Harzfolie mit Infusionstechnologie.
- Fig.13: ist eine schematische Darstellung und illustriert den Einsatz der härtbaren Harzfolien als Träger und zugleich als Isolationsschicht für Sensoren oder andere elektrische Funktionselemente, die auf diese Weise in Kohlefaser-Laminate einlaminiert werden können.
- Fig.14: zeigt die Ergebnisse eines Kurzbiegeversuchs zur Bestimmung der scheinbaren interlaminaren Scherfestigkeit Benzoxazin-basierter Faserverbundproben.

### Beschreibung der Ausführungsbeispiele

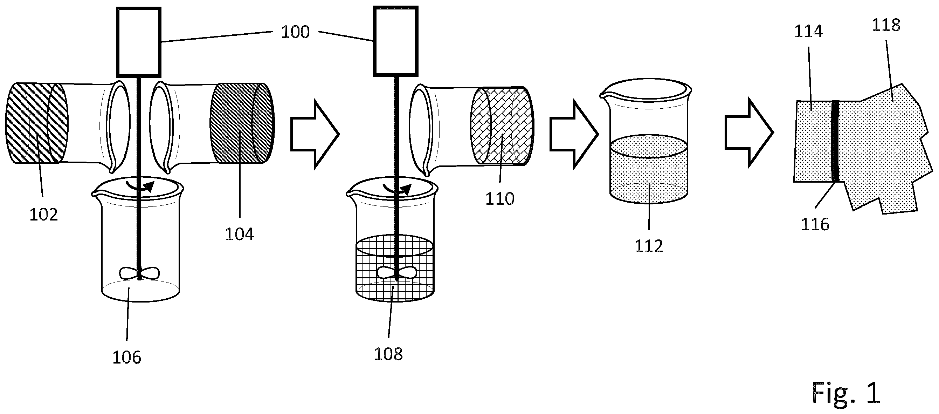

Die Herstellung der härtbaren, freistehenden handhabbaren Folien erfolgt in zwei Schritten im Fall eines Benzoxazins und in drei Schritten im Fall eines Epoxidharzes als Reaktivharzkomponente, die in Figur 1 illustriert sind:
1. Einmischen der Thermoplast-Komponente in das Reaktivharz bei Temperatur T1.
2. Einmischen des latenten, pulverförmigen Härters bei Temperatur T2 im Fall des Epoxidharzes.
3. Rakeln der einphasigen Mischung bei Temperatur T1 bzw. T2 und Abkühlen zur härtbaren, freistehenden handhabbaren Folie.

Die Temperatur T1 ist dabei größer als T2. T2 wird so hoch gewählt, dass der pulverförmige Härter in möglichst kurzer Zeit fein dispergiert werden kann. Dann ist das Epoxidharz-Thermoplast-Gemisch ausreichend dünnflüssig. T2 wird so niedrig gewählt, dass sich der pulverförmige, latente Härter noch nicht im Harz-Härter-Gemisch beginnt zu lösen und die Härtung des Gemischs noch nicht beginnt.

Die im Schritt 3 hergestellte, härtbare Folie kann entweder sofort für einen Herstellungsprozess weiterverwendet werden oder zur Lagerung auf Trennfolie oder Trennpapier abgelegt und aufgerollt werden.

Fig. 1 ist eine schematische Darstellung des Herstellungsprozesses der härtbaren Harzfolien. Die Herstellung der härtbaren Harzfolien kann, wie in Fig. 1 schematisch gezeigt, mit Rührern und temperierbaren Gefäßen erfolgen. Dabei wird stets mittels Rührer 100 in eine Vorlage 106 zunächst das Harz 102 und der Thermoplast 104 gefüllt. Beide Komponenten werden unter Erwärmung solange gerührt bis der Thermoplast vollständig gelöst ist. Das Harz wird zuerst vorgelegt. Nachdem eine homogene Lösung beider Komponenten 108 erhalten wurde, wird der Härter 110 zugegeben und in der Lösung dispergiert bis eine einheitliche Suspension 112 erhalten wird. Ebenso ist es möglich auch eine Mischung mit einem latenten, flüssigen Härter zu erhalten. Zuletzt wird diese Suspension ausgegossen 118 und mittels Rakel 116 ein gleichmäßiger Film 114 hergestellt. Es können auch andere Misch- und Folienpräparationstechniken verwendet werden. Solche Techniken umfassen beispielsweise die Mischung der Komponenten in dafür geeigneten Doppelschneckenextrudern und anschließendes Spritzgießen einer Folie aus dem Gemisch.

Zur Erfüllung der genannten Anforderungen ist die Thermoplast-Komponente hochmolekular ausgebildet. Die Thermoplast-Komponente verleiht der härtbaren Folie eine hohe Festigkeit bereits im ungehärteten Zustand. Gleichzeitig ist die Thermoplast-Komponente gut mit dem Reaktivharz mischbar. Die Harz-Thermoplast-(Härter)-Mischung weist eine ausreichende Flexibilität auf. Auf diese Weise entsteht eine flexible, gut bei Raumtemperatur in eine Form einlegbarer Harz-Thermoplast-(Härter)-Folie. Es findet keine Entmischung der Thermoplast- und Reaktivharz-Komponenten beim Abkühlen nach dem Rakeln und bei Lagerung statt. Das Epoxidharz-Thermoplast-Gemisch ist bereits bei Temperaturen ausreichend flüssig ist, bei denen latente, pulverförmige Epoxidharz-Härter sich noch nicht anfangen aufzulösen und mit dem Epoxidharz zu reagieren.

Die gute Mischbarkeit mit dem Harz gewährleistet eine gute Durchmischung mit den benachbarten Epoxidharzschichten der Prepregs während der Härtung und Formgebung.

Im Folgenden werden Ausführungsbeispiele für Epoxid- und Benzoxazinharze beschrieben. Es versteht sich, dass diese Ausführungsbeispiele die Erfindung lediglich illustrieren und auch andere Anteile und Substanzen mit vergleichbaren Eigenschaften eingesetzt werden können.

Ausführungsbeispiele auf Basis von Epoxiden als Reaktivharz-Komponente:

### Ausführungsbeispiel 1

In 100 g DEGBA werden 12,5 g Poly(1-vinylpyrrolidone-co-vinyl actetat) suspendiert. Danach wird die Suspension auf 120 °C erwärmt und 1 h bei 120 °C gerührt bis das Poly(1-vinylpyrrolidone-co-vinyl actetat) vollständig gelöst ist. Danach wird die klare Lösung auf 110 °C abgekühlt und 33,6 g DDS werden innerhalb von 10 min zu der Lösung zudosiert. Anschließend wird das DDS homogen in der Lösung suspendiert (5 min bei 2000 U/min). Diese Suspension wird dann mit einem Folienziehrakel auf einer Trennfolie gerakelt. Der erkaltete Film bildet eine Folie, die beispielsweise mit einer Trennfolie aufgerollt und gelagert werden kann.

### Ausführungsbeispiel 2

In 100 g DEGBA werden 12,5 g Poly (2-ethyl·2-oxazoline) suspendiert. Danach wird die Suspension auf 120 °C erwärmt und 1 h bei 120 °C gerührt bis das Poly (2-ethyl-2-oxazoline) vollständig gelöst ist. Danach wird die klare Lösung auf 110 °C abgekühlt und 33,6 g DDS werden innerhalb von 10 min zu der Lösung zudosiert. Anschließend wird das DDS homogen in der Lösung suspendiert (5 min bei 2000 U/min). Die Suspension wird mit einem Folienziehrakel auf einer Trennfolie gerakelt. Der erkaltete Film bildet eine Folie, die beispielsweise mit einer Trennfolie aufgerollt und gelagert werden kann.

### Ausführungsbeispiel 3:

In 100 g DEGBA werden 30 g Poly (2-ethyl-2-oxazoline) suspendiert Danach wird die Suspension auf 120 °C erwärmt und 1 h bei 120 °C gerührt bis das Poly (2-ethyl-2-oxazoline) vollständig gelöst ist. Danach wird die klare Lösung auf 80°C abgekühlt und 11,4 g DiCy werden innerhalb von 10 min zu der Lösung zudosiert. Anschließend wird das DiCy homogen in der Lösung suspendiert (5 min bei 2000 U/min). Die Suspension wird dann mit einem Folienziehrakel auf einer Trennfolie gerakelt. Der erkaltete Film bildet eine Folie, die beispielsweise mit einer Trennfolie aufgerollt und gelagert werden kann.

Ausführungsbeispiele auf Basis von Benzoxazinen als Reaktivharz-Komponente:

### Ausführungsbeispiel 4:

50 g des Bisphenol-A basierten Benzoxazin (Araldite MT 35600, Huntsman) wurden bei 120°C in einem Umluftofen aufgeschmolzen und 15 g des Poly-ε-caprolacton CAPA 6100 (10.000 g/mol) darin vollständig gelöst. Das Gemisch wurde für 30 min bei 120 °C im Ofen gelagert. Anschließend wurde die Schmelze in einem Planetenzentrifugalmixer für 30 sec mit einer Umdrehungszahl von 1000 U/min bei Umgebungsdruck homogenisiert und für 1,5 min mit einer Umdrehungszahl von 1000 U/min und min. 300 mbar entgast. Zur Herstellung der Folien wurden der Behälter mit der homogenen Lösung und der Filmziehrahmen bei 120 °C für bis zu 10 min erwärmt und anschließend direkt durch Auftrag eines Films auf eine Trägerfolie (bevorzugt Silikonfolie) verarbeitet. Vor jedem Filmziehvorgang wird der Temperiervorgang im Ofen wiederholt, um die Fließfähigkeit der Lösung zu gewährleisten. Der erkaltete Film bildet eine Folie, die aufgerollt und gelagert werden kann.

### Ausführungsbeispiel 5:

50 g des Bisphenol-A basierten Benzoxazin (Araldite MT 35600, Huntsman) wurden bei 120°C in einem Umluftofen aufgeschmolzen und 15 g des Poly-ε-caprolacton CAPA 6500 (50.000 g/mol) darin vollständig gelöst. Das Gemisch wurde für 30 min bei 120 °C im Ofen gelagert. Anschließend wurde die Schmelze in einem Planetenzentrifugalmixer für 30 sec mit einer Umdrehungszahl von 1000 U/min bei Umgebungsdruck homogenisiert und für 1,5 min mit einer Umdrehungszahl von 1000 U/min unter Vakuum entgast. Zur Herstellung der Folien wurden der Behälter mit der homogenen Lösung und der Filmziehrahmen bei 120 °C für bis zu 10 min erwärmt und anschließend direkt durch Auftrag eines Films auf eine Trägerfolie (bevorzugt Silikonfolie) verarbeitet. Vor jedem Filmziehvorgang wird der Temperiervorgang im Ofen wiederholt, um die Fließfähigkeit der Lösung zu gewährleisten. Der erkaltete Film bildet eine Folie, die aufgerollt und gelagert werden kann.

Nach der Herstellung der Harzfolie der Ausführungsbeispiele 1 bis 5 und einer Foliendicke von 2 mm erfolgte die Ermittlung der Spannungs-Dehnungs-Kurve der ungehärteten Harzfolie in Anlehnung an die Norm DIN EN 527-3 auf einer Prüfmaschine, wie sie beispielsweise von der Instron GmbH, Darmstadt angeboten werden. 2mm wurden gewählt, um bei der vorhandenen Prüfmaschine eine rauschfreie Kurve zu erhalten. Zusätzlich wurden Versuche zur Herstellung von 50 µm, 200µm und 1mm durchgeführt.

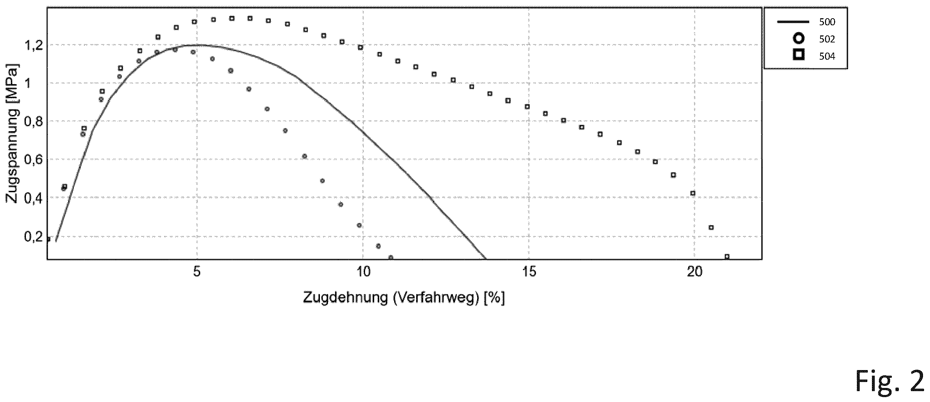

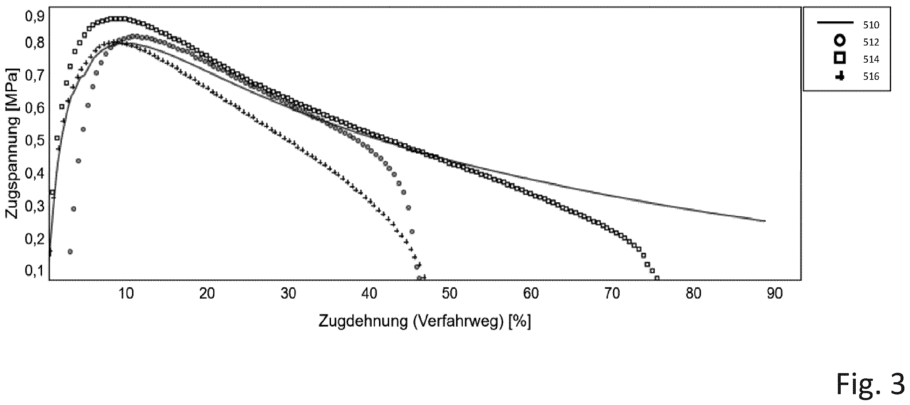

Figuren 2 und 3 zeigen zwei typische Spannungs-Dehnungs-Kurven-Formen für die ungehärteten Folien. Maßgeblich für die Handhabbarkeit der ungehärteten Folien ist dabei das Maximum in der Spannungs-Dehnungs-Kurve, welches als Fließpunkt oder als Fließspannung und Fließdehnung definiert werden kann. Die ungehärteten Harzfolien dürfen nicht über das Maximum hinaus belastet werden um Kaltfließen zu vermeiden.

Das Maximum in den Spannungs-Dehnungskurven definiert die Belastungsgrenze für die ungehärtete Folie. In der nachstehend aufgeführten Tabelle 1 sind Spannungs-· und Dehnungswerte für das jeweilige Spannungsmaximum angegeben.

Figur 2 zeigt Spannungs-Dehnungs-Kurven für die ungehärtete, auf 2 mm gerakelte Folie aus DEGEBA / DDS mit 12,5 Teilen Poly(2-ethyl-2-oxazoline) bei einer Lagerung über 2h bei Raumtemperatur. Untersucht wurden 3 Probekörper 500, 502 und 504 aus dem gleichen Material.

Figur 3 zeigt Spannungs-Dehnungs-Kurven für die ungehärtete, auf 2 mm gerakelte Folie aus DEGEBA/DDS mit 12,5 Teilen Poly(1-vinylpyrrolidone-co-vinylacetat) bei einer Lagerung über 2h bei Raumtemperatur. Untersucht wurden 4 Probekörper 510, 512, 514 und 516 aus dem gleichen Material. Die in Figuren 2 und 3 gezeigten Werte für die maximale Spannung, auch als Fließspannung bezeichnet, zeigen, dass die Folien eine gute Handhabbarkeit aufweisen. Das bedeutet, dass Folien mit derartigen Fließspannungen für das präzise Ablegen in einer Form oder für das abwechselnde Stapeln mit trockenen Gewebelagen ausreichend belastbar sind. Die ermittelten Werte zeigen, dass die Dehnung bei maximaler Zugspannung der Proben in Abhängigkeit der Formulierung zwischen 9 und 17% liegt. Damit ist zugleich eine gute Flexibilität zum Ablegen gegeben. Die Art der Lagerung der Probensätze hat dabei keinen Einfluss auf die mechanischen Eigenschaften der Harzfolie. Dies bedeutet, dass die Filmeigenschaften über eine längere Zeit bei Raumtemperatur erhalten bleiben, also ein ausreichend langes Verarbeitungs-Zeitfenster gegeben ist. Benzoxazin-basierte Probekörper zeigen analoges Verhalten in Spannungs-Dehnungs-Kurven.

**Tabelle 1 zeigt Formulierungen für ungehärtete Harzfolien und Spannung und Dehnung am Maximum der Spannungs-Dehnungskurve eines Zugtests an der ungehärteten Harzfolie.**

| **Probensatz** | **Formulierung** | **Prüfbedingungen** | **Zugspannung max [MPa]** | **Zugdehnung max [%]** |
|---|---|---|---|---|
| 1 | DEGEBA + 12,5 Teile Poly(1-vinylpyrrolidone-co-vinyl actetat) + DDS | Zugprüfung → nach Lagerung 20 h @ RT | 0,82 ± 0,03 | 9,72 ± 1,28 |
| 2 | | | 0,84 ± 0,05 | 8,97 ± 0,66 |
| 3 | | | 1,18 ± 0,04 | 7,75 ± 0,56 |
| 4 | DEGEBA + 12,5 Teile Poly(1-vinylpyrrolidone-co-vinyl actetat) + DDS | Zugprüfung → nach Lagerung 4 d @ RT | 0,98 ± 0,04 | 9,08 ± 0,34 |
| 5 | | | 1,07 ± 0,10 | 8,56 + 0,58 |
| 6 | | | 1,05 ± 0,03 | 8,65 ± 0,59 |
| 7 | DEGEBA + 12,5 Teile Poly(1-vinylpyrrolidone-co-vinyl actetat) + DDS | Zugprüfung → nach Lagerung 24 h @ -18 °C und 20 h @ RT | 0,74 ± 0,02 | 10,70 ± 1,07 |
| 8 | | | 0,64 ± 0,03 | 11,03 ± 0,88 |
| 9 | | | 0,73 ± 0,07 | 10,31 ± 0,73 |
| 10 | DEGEBA + 12,5 Teile Poly (2-ethyl-2-oxazoline) + DDS | Zugprüfung → nach Lagerung 2 h @ RT | 1,234 ± 0,09 | 5,199 ± 0,85 |
| 11 | | | 1,375 ± 0,14 | 6,787 ± 0,26 |
| 12 | | | 1,329 ± 0,03 | 6,799 ± 0,35 |
| 13 | DEGEBA + 12,5 Teile Poly (2-ethyl-2-oxazoline) + DDS | Zugprüfung → nach Lagerung 24 h @ -18 °C und 20 h @ RT | 2,116 ± 0,05 | 6,987 ± 0,50 |
| 14 | | | 2,395 ± 0,11 | 7,147 ± 0,24 |
| 15 | | | 1,972 ± 0,20 | 5,891 ± 1,93 |
| 16 | DEGEBA + 12,5 Teile Poly (2-ethyl-2-oxazoline) + DDS | Zugprüfung → nach Lagerung 4 d @ RT | 2,256 ± 0,22 | 6,338 ± 1,11 |
| 17 | | | 2,088 ± 0,23 | 6,013 ± 0,85 |
| 18 | | | 2,880 ± 0,11 | 7,148 ± 0,29 |
| 19 | DEGEBA + 30 Teile Poly (2-ethyl-2-oxazoline) + DiCy | Zugprüfung → nach Lagerung 4 h @ RT | 0,028 ± 0,00 | 11,479 ± 0,39 |
| 20 | | | 0,028 ± 0,02 | 16,626 ± 4,47 |
| 21 | | | 0,05 ± 0,01 | 12,966 ± 4,82 |
| 22 | DEGEBA + 30 Teile Poly (2-ethyl-2-oxazoline) + DiCy | Zugprüfung → nach Lagerung 24 h @ -18 °C | 0,053 ± 0,02 | 17,147 ± 3,11 |
| 23 | | | 0,03 ± 0,01 | 16,894 ± 2,52 |
| 24 | DEGEBA + 30 Teile Poly (2-ethyl-2-oxazoline) + DiCy | Zugprüfung → nach Lagerung 24 h @ RT | 0,071 ± 0,01 | 16,176 ± 2,24 |

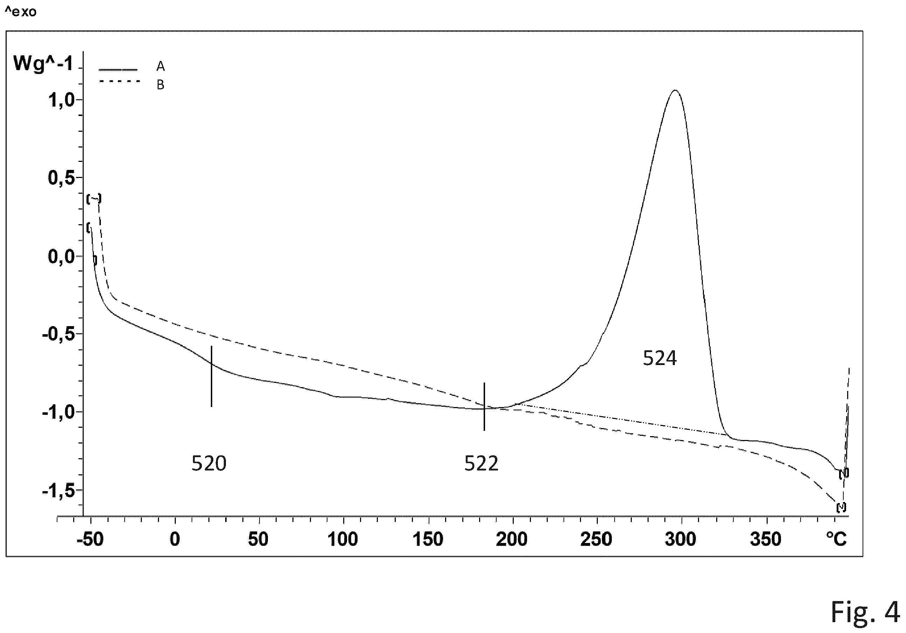

Die Aushärtung der in den Ausführungsbeispielen 1 bis 5 hergestellten Formulierungen wurde zunächst mittels Differential Scanning Calorimetry (DSC) kontrolliert. Ein Beispiel ist in Figur 4 gezeigt. Figur 4 zeigt DSC-Kurven der Harzformulierung aus Ausführungsbeispiel 1 mit 2 runs A und B. Die Reaktionsenthalpie 524 entspricht mit 336 J/g derjenigen für DGEBA und DDS, korrigiert mit der Verdünnung durch die Thermoplast-Komponente. Während des Misch- und Rakelprozesses ist folglich noch keine nennenswerte Vernetzungsreaktion erfolgt. Die Folie ist praktisch ungehärtet. Nach der Härtung 522 ist ein Anstieg der Glasübergangstemperatur auf 185 °C gegenüber 25 °C vom ungehärteten Zustand 520 zu beobachten. Benzoxazin-basierte Formulierungen zeigen ein vergleichbares Verhalten.

### Ausführungsbeispiel 6

### Folien-Stacking:

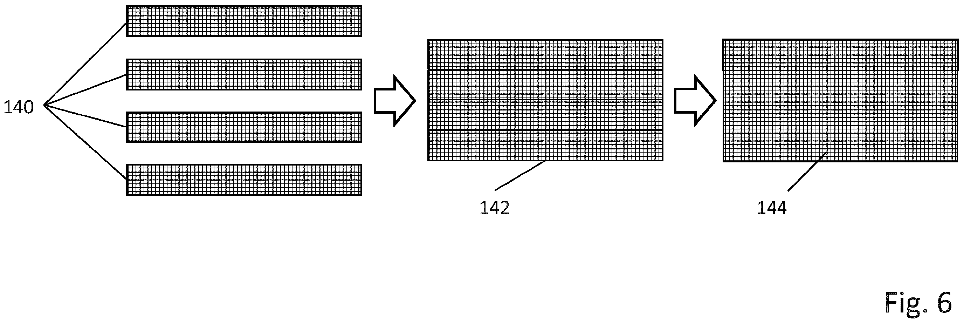

Die gerakelte Folie aus Ausführungsbeispiel 1 wurde in 6×6 cm² große Stücke zugeschnitten und übereinandergestapelt. Figur 6 illustriert schematisch das Stapeln 140 und Härten der Folien 142 und die Herstellung einer gehärteten Reinharzprobe 144 für DMA-Messungen durch Stapeln, auch als "Stacking" bezeichnet, ungehärteter Folien. Anschließend erfolgte die Härtung im Trockenschrank für 2h bei 130°C und 6h bei 180°C im Fall der Epoxid-basierten und für 2 Stunden bei 180°C und 2 Stunden bei 200°C im Fall der Benzoxazin-basierten gestapelten Folien.

### Ausführungsbeispiel 7

### Laminatherstellung mit Epoxid-basierten ungehärteten Folien :

Die gerakelte Folie aus Ausführungsbeispiel 1 wurde in 6×6 cm² große Stücke zugeschnitten und abwechselnd mit trockenem Glasgewebe übereinandergestapelt. Anschließend erfolgte die Härtung des Epoxidharz-basierten gestapelten Laminates in einer Heißpresse für 2h bei 130°C und 6h bei 180°C sowie einem Pressendruck von 5kN.

Die Laminatherstellung mit Benzoxazin-basierten ungehärteten Folien kann im Pressverfahren, im Vakuumsackverfahren (<1mbar) und im Vakuumsackverfahren unter zusätzlicher Druckbeaufschlagung von >3 bar bevorzugt 11 bar im Autoklaven durchgeführt werden. Das bevorzugte Verfahren ist das Vakuumsackverfahren ohne Überdruck.

### Ausführungsbeispiel 8

Laminatherstellung mit Benzoxazin-basierten ungehärteten Folien im Vakuumsackverfahren:
Die im Ausführungsbeispiel 4 hergestellten Folien und Glasfasergewebe (Flächengewicht von 280 g/m2) wurden in 8×8 cm² große Stücke geschnitten und abwechselnd beginnend mit einer Lage Glasfasergewebe gestapelt. Mit dem Ziel eines Fasermassenanteils von 40% wurden für einen Laminataufbau mit 8 Lagen Glasfasern Polymerfolien mit einer Gesamtmasse von 9 g verwendet. Der Laminataufbau erfolgte auf einer metallischen Trägerplatte mit einer Trennfolie als unterste Schicht. Auf den Laminataufbau wurde eine Lochfolie gelegt. Ein Vakuumdichtband wurde umlaufend auf der Metallplatte aufgebracht und an diesem eine semipermeable Vakuumfolie und ein Abreißgewebe befestigt. Über den Laminataufbau wurde ein Absaugvlies gelegt, auf welches mittig der Vakuumanschluss platziert wurde. Umlaufend am Rand der Metallplatte wurde der gesamte Aufbau mit Vakuumdichtband eingefasst und mit einer hitzebeständigen Vakuumfolie abgedichtet. Der Aufbau wurde mit einem Vakuum beaufschlagt von bevorzugt < 1 bar, im Ofen innerhalb einer Stunde auf 180°C aufgeheizt und diese Temperatur für weitere zwei Stunden gehalten. Danach erfolgte ein weiteres Aufheizen auf 200°C und Halten bei dieser Temperatur für 2 Stunden. Nach der Aushärtung wurden die Laminate für Raumtemperatur abgekühlt.

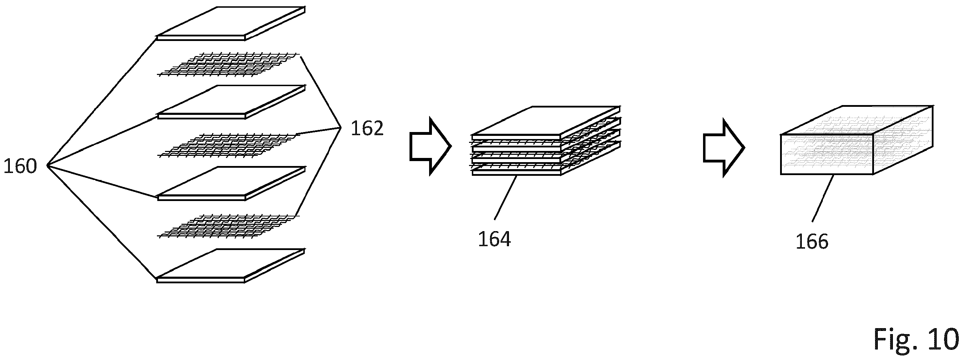

Figur 10 ist eine schematische Darstellung dieses Prozesses. Der Aufbau einer glasfaserverstärkten Laminatplatte 164 wird durch abwechselndes Stapeln der ungehärteten Harzfolien 160 ohne Faserverstärkung und trockener Glasfasergewebelagen 162 erreicht. Die gehärtete Platte 166 wird nach Pressen und Härten in einer Heizpresse erreicht. Dies ist in der Figur 10 dargestellt.

Figur 10 illustriert schematisch die Herstellung von Faser-Kunststoff-Verbund durch abwechselndes Stapeln der ungehärteten und unverstärkten Harzfolien und jeweils einer Fasertextil-Lage, beispielsweise aus einem Gewebe. Anschließend erfolgen die Schritte Verpressen und Härten in einer Heizpresse. Die Durchdringung der Schichten in den Ausführungsbeispielen 4 und 5 wurde anschließend mittels DMA bewertet.

Eine Dynamisch Mechanische Analyse (DMA) misst die temperaturabhängigen, viskoelastischen Eigenschaften des Harzes und des Faser-Kunststoff-Verbund. Die tan δ Kurve ist sehr spezifisch für jedes gehärtete Harz. Sie ist hochgradig reproduzierbar und gleichzeitig sehr spezifisch für jede Harz-Härter(-Modifikator)-Mischung. Wenn die tan δ-Kurven zweier verschiedener gehärteter Harze nahezu identisch sind, ist auch deren chemisch-topologische Netzwerkstruktur und physikalische Überstruktur weitgehend identisch.

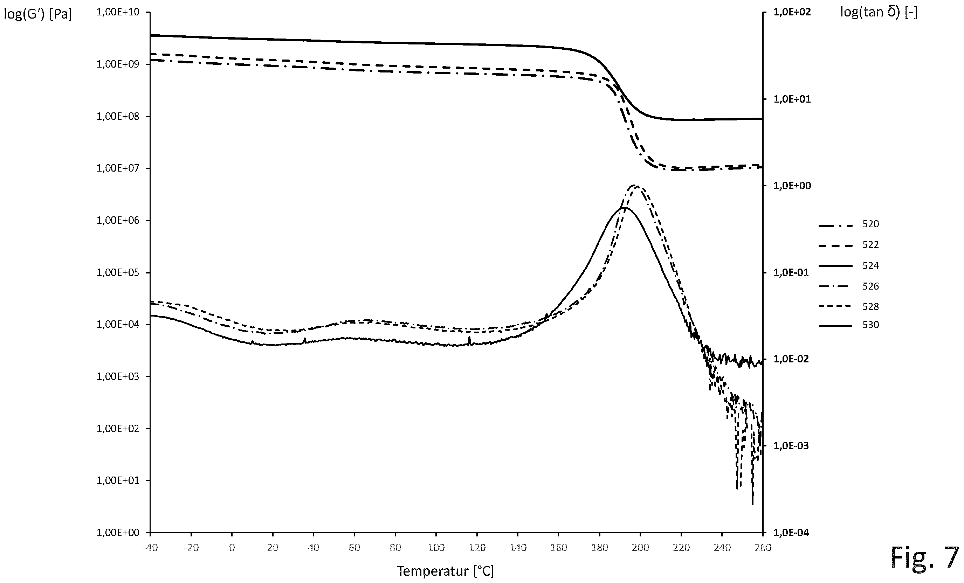

Figur 7 zeigt eine DMA Messung von DEGEBA/DDS mit 12,5 Teilen Poly(1-vinylpyrrolidone-co-vinyl acetat). Die Kurven 520 (log(G') und 526 log(tan δ) zeigen das Harz im Bulk ausgehärtet. Die Kurven 522 (log(G') und 528 log(tan δ) zeigen die Ergebnisse für Folien-Stacking gemäß Ausführungsbeispiel 6. Die Kurven 524 (log(G') und 530 log(tan δ) zeigt das Laminat gemäß Ausführungsbeispiel 7.

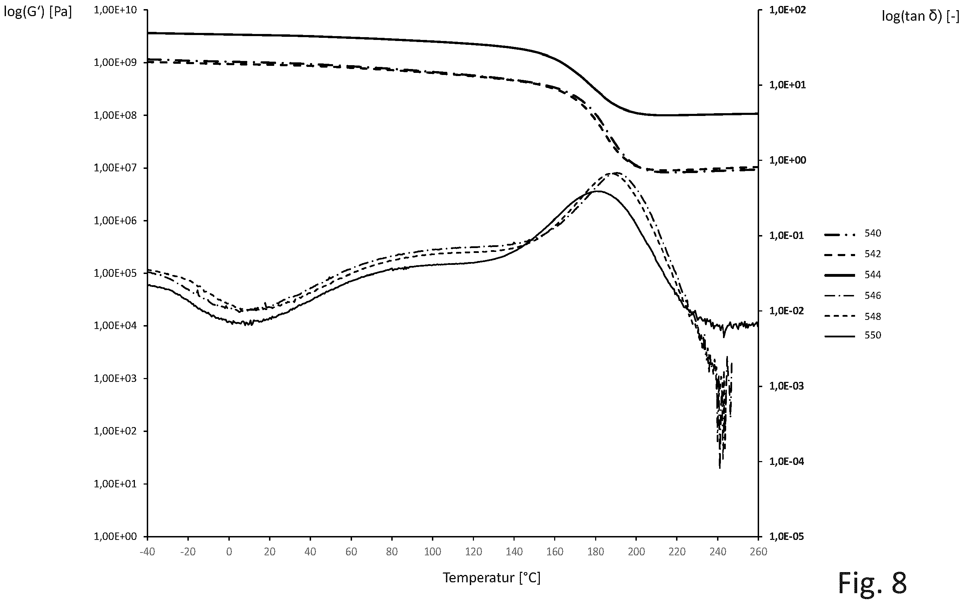

Figur 8 zeigt weiterhin die DMA Messung von DEGEBA / DDS mit 12,5 Teilen Poly(2-ethyl-2-oxazoline). Die Kurven 540 (log(G') und 546 log(tan δ) zeigen das im Bulk ausgehärtete Harz. Die Kurven 542 (log(G') und 548 log(tan δ) zeigen die Ergebnisse für Folien-Stacking. Die Kurven 544 (log(G') und 550 log(tan δ) zeigen das Laminat.

Wenn der schichtweise Aufbau der ungehärteten Folie und das anschließende Härten bei der entsprechenden Härtungstemperatur ohne Druckanwendung zu den gleichen DMA- Kurven führt wie das Gießen der identischen Harzmischung in eine Form und anschließende Aushärtung in dieser, zeigt dies, dass die von ungehärteten Harzfolien gebildeten einzelnen Schichten sich ideal gegenseitig durchdrungen haben. Der Effekt ist in Figur 7 zu sehen. Zu vergleichen sind die Kurven 522, 528 und 520, 526 sowie die Kurven 542, 548 und 540, 546. Die Abbildung zeigt, dass die Komponenten zu einem homogenen 3-dimensionalen Netzwerk härten, welches identisch mit dem Netzwerk ist, das durch Gießen der gleichen Harzformulierung in eine Form und Härten in dieser Form entsteht.

Mit DMA wurde ferner gezeigt, dass das gegenseitige Durchdringen und der homogene Netzwerkaufbau auch beim abwechselnden Aufbau der ungehärteten Harzfolien mit trockenen Fasergewebelagen funktioniert. Diese DMA-Kurven 524, 530 sowie 544, 550 sind unter Berücksichtigung des Einflusses der Faserverstärkung identisch mit den Kurven 520, 526 und 540, 546 des unverstärkten Reinharzes. Die Faserverstärkung bewirkt eine Parallelverschiebung der Modulkurve (G') nach oben sowie eine Verringerung der Peakhöhe des tan 8-Peaks und eine Verschiebung des Peaks zu tieferen Temperaturen hin. Diese Effekte der Faserverstärkung sind bekannt.

Ausführungsbeispiele 8 und 9 entsprechen den Ausführungsbeispielen 6 und 7, aber mit der geraktelten, ungehärteten Harzfolie aus Ausführungsbeispiel 2.

Der wichtigste Vorteil besteht in der Kombination der nachfolgend beschriebenen Eigenschaften der Harzfolien. Im ungehärteten Zustand sind die Folien gut belastbar. Sie weisen hierfür eine ausreichend hohe Festigkeit und Handhabbarkeit auf. Die gute Belastbarkeit ist beispielsweise beim manuellen oder maschinellen Ablegen in eine Form wichtig. Gleichzeitig hat das Material ausreichenden Tack zum Anhaften an eine innere Formoberfläche oder nachfolgende Prepreglagen. Die Folien haben ferner eine ausreichende Flexibilität zum passgenauen Einlegen in 3-dimensionale (konkav ebenso wie konvex) gekrümmte Formen. Diese können sowohl manuell, als auch durch automatisierte Ablegeköpfe abgelegt werden.

Während der Härtung besteht der Vorteil der guten Durchmischung und Co-Härtung mit gleicher Härtungskinetik mit Schichten gleicher Zusammensetzung oder Prepreg-Harzen. Solche Schichten bestehen vorteilhafterweise zumindest aus ähnlichen Grundharzen und Härtern. Sie können auch nicht offengelegte, zusätzliche Komponenten enthalten. Auch eine genaue Zusammensetzung der Schichten muss nicht bekannt sein.

Nach der Härtung besteht der Vorteil der Durchdringung mit benachbarten Harzschichten zu einem homogenen dreidimensionalen Netzwerk. Es wird eine sehr gute Anbindung als Oberflächenfolie oder -film an die darunterliegende Harzmatrix des Prepreg-Harzes oder auch Infusionsharzes erreicht. Gleiche härtbare Harzfolien durchdringen sich gegenseitig vollständig. Trockene Faserlagen werden vollständig durchtränkt. Dabei erfolgt der Harzfluss vorrangig in z-Richtung.

Das Material ermöglicht den Aufbau eines homogenen 3-dimensionalen Netzwerkes durch das gesamte Laminat hindurch. Hierzu kann die härtbare Harzfolie in einer zur Prepreg-Technologie analogen Herstellungstechnik eingesetzt werden.

Beim Einsatz als Oberflächenfolie, beispielsweise als Gelcoat-Ersatz hat die härtbare Harzfolie den Vorteil, dass die Dicke der Oberflächenschicht einer homogenen Vorgabe folgt. Es bestehen keine Fehlstellen und Lufteinschlüsse, da die härtbare Harzfolie blasenfrei und mit einstellbarer Viskosität hergestellt werden kann. Dadurch kann ein reproduzierbarer Prozess mit deutlich geringeren Schwankungen verwirklicht werden. Die Oberflächenfolie kann zusammen mit nachfolgenden Prepreg-Lagen in die Form eingelegt und gehärtet werden. Ein zusätzlicher Prozessschritt, wie bei flüssigen Gelcoats erforderlich, entfällt. Dadurch kann die Fertigungszeit und der Energieverbrauch verringert werden. Das Einlegen der härtbaren Oberflächenfolie in eine Form ist sowohl manuell als auch durch automatisierte Ablegetechniken möglich.

Die bereits bekannten Lösungen mit einem harzreichen, textilverstärktem Prepreg weisen ähnliche Vorteile gegenüber der flüssigen Gelcoat-Technik auf wie die hier beschriebene, härtbare Harzfolie. Die erfindungsgemäße Folie hat jedoch den Vorteil gegenüber bekannten Lösungen, dass sie auch ohne textile Verstärkung verwendet werden kann.

Damit kann die harzreiche Oberflächenschicht dünner ausgebildet sein. Es muss keine zusätzliche textile Verstärkungsschicht abgedeckt und getränkt werden. Dies führt zu einem geringeren Gewicht. Zusätzlich können sich keine Fasern der textilen Verstärkungsschicht an der Oberfläche abzeichnen. Dadurch verbessert sich die Qualität der Oberflächenschicht.

Das Verfahren ist einfacher und unterliegt zugleich geringeren Qualitätsschwankungen. Beim Einsatz der erfindungsgemäßen, härtbaren Harzfolien als alternative Herstellungstechnologie zur Prepreg-Technologie, etwa durch Stapeln oder Ablegen der härtbaren Harzfolien zwischen trockenen Faserlagen, bleiben die Vorteile der Prepreg-Technologie bestehen. Solche Vorteile sind beispielsweise das lastgerechte Ablegen der einzelnen Lagen und einstellbarer Faservolumengehalt. Gleichzeitig kann ein teurer Herstellungsprozess der Prepregs vermieden werden.

Die hier beschriebenen, erfindungsgemäßen härtbaren Harzfolien können deutlich kostengünstiger als Prepregs hergestellt werden. Der Herstellungsprozess ist im Gegensatz zur Prepreg-Herstellung einfach. Er kann inline erfolgen. Das bedeutet, dass in einer Produktionskette zusammen mit der Faser-Kunststoff-Verbund-Bauteilherstellung, der Transport der Folie entfällt.

Die erfindungsgemäßen, härtbaren Harzfolien können universell für alle Faser und Textilarten eingesetzt werden. Das bewirkt weitere Kosteneinsparungen gegenüber der Prepreg-Technologie, denn bei der Prepreg-Technologie müssen für jede Faser- und Textilart separate Prepregs hergestellt werden, selbst wenn die Harzmatrix die Gleiche ist.

Beim Einsatz von härtbaren Harzfolien als Träger für funktionale Füllstoffe liegt der wesentliche Vorteil in der sehr präzisen Platzierung der funktionalen Füllstoffe im Lagenaufbau des Verbundes. Das ermöglicht eine gute Ausnutzung der Funktion dieser Füllstoffe. Somit können zusätzliche Funktionen, wie z.B. Flammschutz, bei minimalem Gewichtszuwachs eingebaut werden.

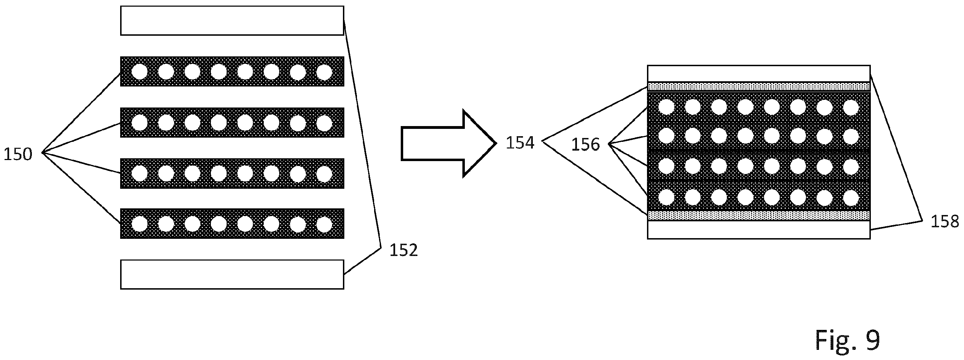

Fig.9 illustriert, wie die härtbaren Oberflächenfolien als Folie in eine Form eingelegt und nachfolgend mit kommerziellen Prepregs gehärtet werden. Kommerzielle Prepregs sind in ihrer Zusammensetzung nicht genau offengelegt. Das verwendete Basis-Epoxidharz und der Härter sind aber oft genannt oder vorher bekannt. Wenn Harz und Härter der härtbaren Oberflächenfolie mit dem Basisharz und Härter des Prepreg-Harzes kompatibel sind, kann von einer gegenseitig guten Durchdringung zwischen Oberflächenfolie und der nächsten Prepreg-Lage und gemeinsamen Härtung von Oberflächenfolie und Prepreg-Harz ausgegangen werden. Der Grund ist die gute Mischbarkeit der Thermoplast-Komponente in der härtbaren Oberflächenfolie. Die Durchdringung bewirkt eine sehr gute Anbindung der Oberflächenfolie an die darunterliegenden Faserlagen und Harzschichten. Dies ist schematisch in Fig. 3 rechts gezeigt. Mit derartigen härtbaren Oberflächenfolien können harzreiche Oberflächenschichten mit guten Oberflächen, guter Schutzfunktion der darunterliegenden Faserlagen, erhöhter Beständigkeit des Verbundes und guter Lackierbarkeit erhalten werden.

Vorrangige Anwendungsgebiete stellen Faser-Verbund-Kunststoff-Bauteile mit hohen Anforderungen an Oberflächengüte und Dauerhaltbarkeit dar. Beispiele sind Rotorblätter für Windenergie-Anlagen, Flugzeugbauteile, Faser-Verbund-Kunststoff-Karosseriebauteile für Automobile und Schienenfahrzeuge sowie Sportgeräte, wie Rennrad, Paddel, Boote, Ski, Bobschlitten und dergleichen mehr. Die härtbaren Harzfolien können sowohl manuell in die Form eingelegt werden als auch in automatisierten bzw. semi-automatisierten, manuell gesteuerten, aber maschinellen, Ablegeprozessen abgelegt werden.

Figur 9 illustriert den Einsatz der härtbaren Harzfolien 152 als Oberflächenfolie zur Erzeugung harzreicher Oberflächenschichten mit guter gegenseitiger Durchdringung zu den darunter befindlichen Prepreglagen 150. Prepreglagen können von kommerziellen Prepregs mit nicht vollständig offengelegter chemischer Zusammensetzung gebildet sein. Im fertigen Bauteil sind die harzreichen Deckschichten 158 gefolgt von Interdiffusionszonen 154 und den Prepreglagen 156 angeordnet. Die Interdiffusionszonen 154 bilden einen Bereich gegenseitiger Durchdringung von Prepregharz und Deckschicht-Harz.

Eine weitere Einsatzmöglichkeit ist die kostengünstige Herstellung von Faser-Verbund-Kunststoff-Bauteilen, die analog der Prepreg-Technologie funktioniert. Dabei werden die Lagen wie bei der Prepreg-Technologie einzeln abgelegt. Figur 10 illustriert, wie anders als bei den bekannten Verfahren abwechselnd die härtbare Harzfolie und die trockenen Faserlagen abgelegt werden.

Bei der bekannten Prepreg-Technologie werden harzgetränkte Prepregs aufeinander abgelegt. Bei der erfindungsgemäßen, kostengünstigen Technologie können die Vorteile der Prepreg-Technologie beibehalten werden. Solche Vorteile sind beispielsweise die definierte Ablage der Faserlagen und der gut kontrollierte Fasergehalt. Der aufwändige vorherige Schritt der Prepreg-Herstellung entfällt.

Die härtbaren Harzfolien können deutlich kostengünstiger als Prepregs hergestellt werden und sind universell für verschiedene Faserarten und Fasertextil-Arten einsetzbar. Beispiele für verschiedene Fasertextil-Arten sind die Gewebeart oder unidirektionale Tapes. Bei der Prepreg-Technologie muss für jede Faser- und textile Verstärkungsart ein separates Prepreg vorab hergestellt werden. Anwendungen könnten daher Faser-Verbund-Kunststoff-Anwendungen mit duroplastischer Matrix sein, wo Kosteneinsparungen wünschenswert oder erforderlich sind.

Figur 10 illustriert den Einsatz des härtbaren Harzfilms für einen Laminataufbau analog zur Prepreg-Technologie. Anders als bei der bekannten Prepreg-Technologie werden Harzfolien 160 und trockene Faserlagen 162 abwechselt gestapelt 164. Anschließend erfolgt die Härtung z.B. in einer Heißpresse, so dass ein einheitliches Laminat 166 gebildet wird. Der teure und aufwändige vorherige Schritt der Prepreg-Herstellung entfällt. Das Bild links zeigt schematisch den Lagenaufbau durch Stapeln von Harzfolie und trockenen Fasern. Beispielsweise kann ein Gewebe, Gelege oder unidirektional gestapelt werden.

Figur 10 zeigt in der Mitte den Stapel vor dem Komprimieren. Dabei erfolgt abwechselnd eine Schichtung von reiner Harzfolie ohne Faserverstärkung und trockene Faserlagen. Ein Beispiel für eine trockene Faserlage kann ein Gewebe, unidirektionale Tapes, oder Ähnliches sein.

Figur 10 zeigt rechts die Durchdringung, Tränkung und Komprimierung des Lagenaufbaus durch Anwendung von Druck und Temperatur. Hierfür können beispielsweise ein Vakuumheiztisch, eine Heizpresse oder ein Autoklav verwendet werden. Auf diese Weise entsteht das ausgehärtete fertige Faser-Verbund-Kunststoff-Bauteil.

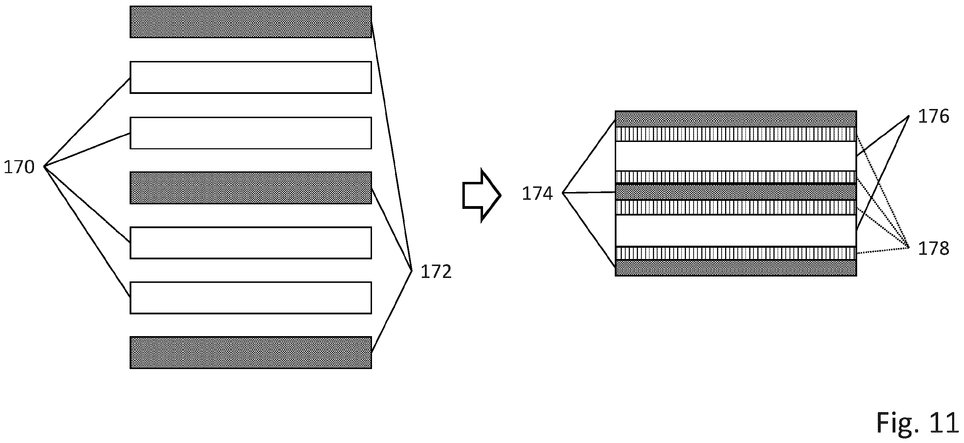

Ein weiteres Anwendungsgebiet ist das Einbringen von funktionalen Füllstoffen sowohl in Decklagen als auch Zwischenlagen zwischen zwei Faserlagen. Dies ist schematisch in Figur 11 illustriert. Die Füllstoffe können im Herstellungsprozess der Harzfolien mit eingemischt werden.

Beispielsweise können sie zusammen mit der Härterkomponente im zweiten Mischvorgang in Figur 1 oder in einem Mehrkomponenten-Doppelschneckenextruder-Mischprozess eingemischt werden. Die Harzfolie behält ihre Verarbeitungseigenschaften.

Bei Anwendung analog zu Figur 9 können funktionale Füllstoffe gezielt genau dort in den Lagenaufbau eines Faser-Verbund-Kunststoff-Bauteiles eingebracht werden, wo sie ihre maximale Wirkung entfalten. Damit können zusätzliche Funktionalitäten eingebracht werden. Zusätzliche Funktionalitäten umfassen beispielsweise Flammschutz oder Barrierewirkung. Die Füllstoffe erreichen die Funktionalität bei minimalem Gewichtszuwachs. Anwendungen sind Faser-Verbund-Kunststoff-Bauteile mit erhöhten Brandschutzanforderungen. Solche Anwendungen umfassen Flugzeugbau, Schiffbau, Schienenfahrzeugbau und Bauwesen. Auch Faser-Verbund-Kunststoff-Flüssig- oder Gastanks mit hoher Barrierewirkung gegenüber den gespeicherten Flüssigkeiten oder Gasen, z. B. sogenannte linerless CFRP vessels, sind eine erfindungsgemäße Anwendung.

Figur 11 zeigt das gezielte Einbringen funktionaler Füllstoffe 172 in Deckschichten und interlaminaren Zwischenschichten 170 durch härtbare, insbesondere mit funktionalen Füllstoffen gefüllte Harzfolien. Dabei existieren in der gefertigten Folie Bereiche mit den funktionalen Füllstoffen 174, Mischbereiche 178 und Bereiche ohne Füllstoffe 176.

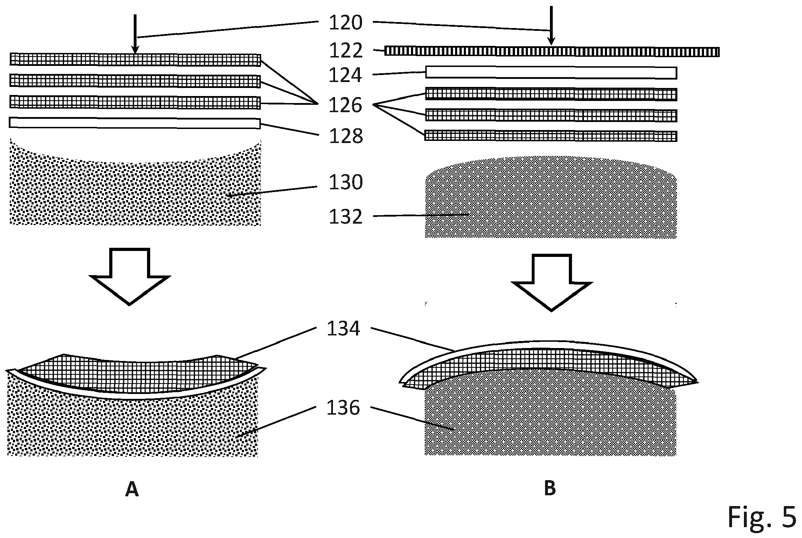

In Figur 5 wird die härtbare Harzfolie zur Erzeugung guter, harzreicher Oberflächen in der Prepreg-Technologie eingesetzt.

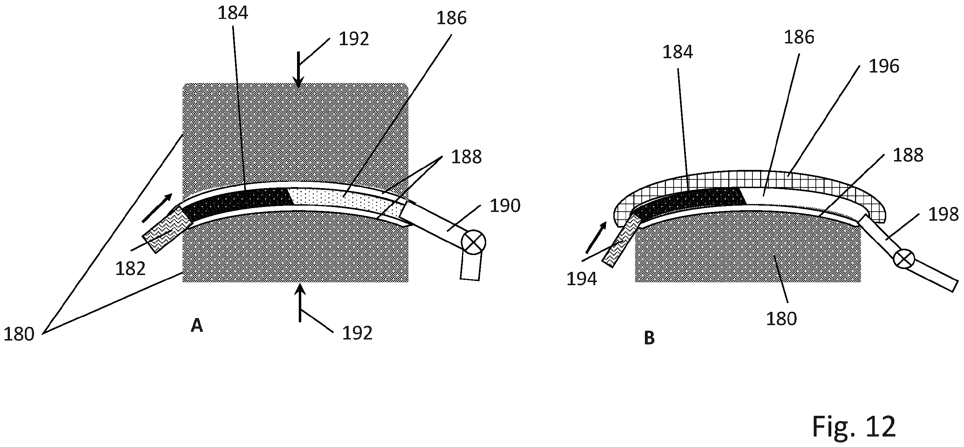

Zusätzlich ist der Einsatz auch in Infusionstechnologien, etwa RTM Figur 12 A und Vakuuminfusion Figur 12 B möglich. Die härtbare Harzfolie 188 kann für beide Oberflächen, wie in Fig. 12 links schematisch gezeigt, oder nur für eine Oberfläche, wie in Abb. 12 rechts schematisch gezeigt (hier die innere Oberfläche der Form 180) angewendet werden. In beiden Fällen erfolgt die Infiltration von trockenen Textillagen 186 mit Harz 182 unter Druck bis zur vollständigen Tränkung des Textils mit Harz 184. Bei der RTM-Technologie wird die Form dabei mittels Druck 192 geschlossen gehalten. Das überschüssige Harz 190 wird zuletzt abgeführt. Bei der Vakuuminfusion wird ein Vakuumbag 196 eingesetzt. Die Zuführung 194 des Harzes erfolgt ohne Druck. Die Evakuierung erfolgt über einen Schlauch über den zuletzt auch das überschüssige Harz 198 abgeführt wird.

Wenn es um einen Oberflächenfilm geht, kann sich dieser im Fertigungsprozess sowohl an der inneren Oberfläche als auch an der äußeren Oberfläche befinden. Daher ist dann auch das Koordinationsystem jeweils anders. Einmal befinden sich die faserverstärkten Lagen unter diesem Oberflächenfilm (bei Positiv-Formen, Figur 5 A) und einmal befinden sich die faserverstärkten Lagen darüber (Negativ-Formen, Figur 5 B). Dies ist in Figur 5 dargestellt. Dabei wird mittels Druck 120 ein Stapel bestehend aus der Harzfolie 124 bzw. 128 und Preperglagen 126 sowie ggf. einer Vakuumfolie 122 in die Form 136 gepresst. Die erhaltenen Bauteile 134 weisen dann entsprechende Harzreiche Decksichten auf.

Eine weitere Anwendungsmöglichkeit ist der Einsatz von Sensoren oder anderen elektrischen Funktionselementen. Solche elektrische Funktionselemente umfassen beispielsweise Heizungen oder Aktuatoren. Die Sensoren oder Funktionselemente werden in das Innere eines Faser-Kunststoff-Verbund eingebracht. Bei bekannten Anordnungen besteht das Problem, dass Sensoren und ähnliche elektrische Funktionselemente auf Substraten aufgebracht worden sind, die sowohl von Größe und Form als auch von der Chemie her nicht mit dem Laminataufbau kompatibel sind. Die Elemente bilden beim Einlaminieren eine Störstelle für die mechanischen Eigenschaften des Laminates. Auch die elektrische Isolation des Sensors oder ähnlicher elektrischer Funktionselemente zu den Kohlefasern des Faser-Kunststoff-Verbund ist ein Problem. Beide Probleme könnte mit den erfindungsgemäßen, härtbaren Harzfolien gelöst werden.

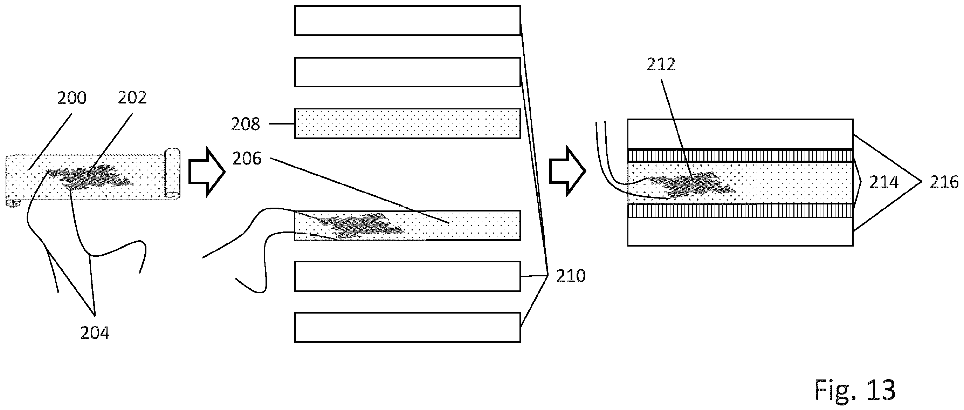

Die härtbare Harzfolie dient dabei als Substrat für den Sensor oder ein ähnliches elektrisches Funktionselement. Dies ist schematisch in Fig. 13 dargestellt.

Figur 13 zeigt den Einsatz der härtbaren Harzfolien 200 als Träger und zugleich Isolationsschicht für Sensoren und ähnliche elektrische Funktionselemente 202 mit entsprechender Kontaktierung 204, die auf diese Weise in Kohlefaser-Laminate einlaminiert werden können. Das Aufbringen des Sensors erfolgt durch Aufdrucken, durch einen galvanischen Auftrag oder durch Auflegen einer dünnen strukturierten Metallfolie, welche den Sensor darstellt. Durch Laminieren in Form von Stapeln einer weiteren härtbaren Harzfolie 208, sowie den Einbau des damit zwischen zwei härtbaren Harzfolien eingeschlossenen Sensors 206 wird eine optimale Anbindung zu den darüber- und darunterliegenden Prepreg-Lagen 210 als auch die elektrische Isolation zu den Kohlefasern dieser Prepreglagen erreicht. Beim Verpressen der Schichten unter Druck und Temperatur bildet sich dann eine isolierende Schicht 212 mit dem Sensor, Mischbereichen 214 und den außenliegenden Prepreglagen 216. Dies ist ebenfalls schematisch in Figur 13 dargestellt.

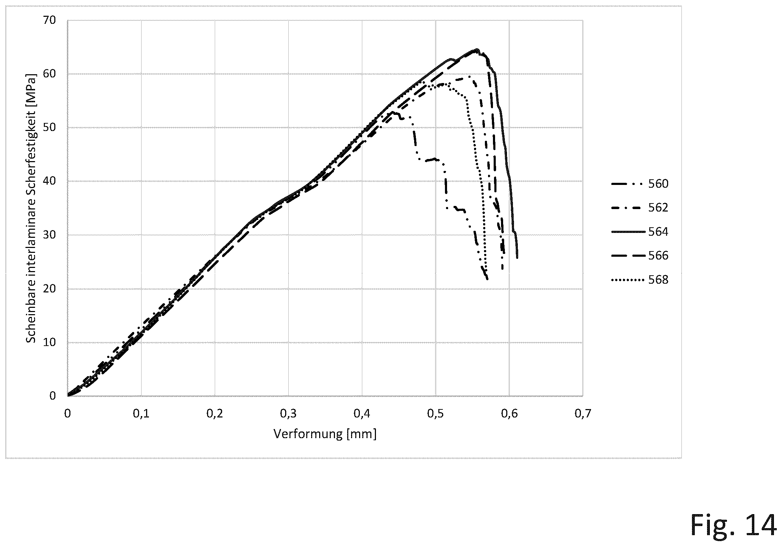

Figur 14 zeigt Spannungs-Dehnungskurven eines Kurzbiegeversuchs zur Ermittlung der scheinbaren interlaminaren Scherfestigkeit von gehärteten Faserverbundproben gleichen Materials 560, 562, 564, 566 und 568, die gemäß Ausführungsbeispiel 8 im Vakuumsackverfahren gefertigt wurden. Die Faserverbundproben basieren auf der Benzoxazin-Formulierung gemäß des Ausführungsbeispiels 4 mit Glasfaserverstärkung. Die Bestimmung des Widerstandes gegen interlaminare Scherbeanspruchung parallel zu den Lagen des Laminats wird als typisches Verfahren zur Qualitätssicherung bei der Faserverbundfertigung herangezogen und liefert Aussagen über die Faser/Matrix-Anbindung. Die erzielten interlaminaren Scherfestigkeiten liegen in einem für ausgehärtete faserverstärkte Benzoxazine typischen Kennwertbereich von 50-60 MPa.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Zusammensetzung zur Herstellung eines flächigen Halbzeugs enthaltend
(a) einen zu einem Duroplast härtbaren Reaktivharz in Form eines Polyadditionsharzes oder einen mittels Ringöffnungspolymerisation härtbaren Reaktivharz; und
(b) einen bei einer ersten Temperatur dem Reaktivharz hinzugefügten einphasig mischbaren Thermoplast;
**dadurch gekennzeichnet, dass**
(c) das Reaktivharz und/oder ein bei einer zweiten Temperatur der Reaktivharz-Thermoplast-Masse hinzugefügter Härter latent ist, und
(d) die Mischung während der Härtung einphasig bleibt.

2. Zusammensetzung nach Anspruch 1, **dadurch gekennzeichnet, dass** der Masseanteil des Thermoplasts geringer ist, als der Masseanteil des Reaktivharzes.

3. Zusammensetzung nach einem der vorgehenden Ansprüche, **dadurch gekennzeichnet, dass** die erste und/oder die zweite Temperatur oberhalb 25°C liegt.

4. Zusammensetzung nach einem der vorgehenden Ansprüche, **dadurch gekennzeichnet, dass** die zweite Temperatur, bei welcher der Härter zugefügt wird, geringer ist, als die erste Temperatur, bei welcher der Thermoplast hinzugefügt wird.

5. Zusammensetzung nach einem der vorgehenden Ansprüche, **dadurch gekennzeichnet, dass** ein Härter in Pulverform hinzugefügt wird.

6. Zusammensetzung nach Anspruch 5, **dadurch gekennzeichnet, dass** die zweite Temperatur derart ausgewählt ist, dass das Gemisch eine ausreichend geringe Viskosität aufweist, welche ein Dispergieren des pulverförmigen Härters ermöglicht und gleichzeitig unterhalb der Temperatur liegt, bei welcher der Härter sich in dem Gemisch löst und das Gemisch aushärtet.

7. Zusammensetzung nach einem der vorgehenden Ansprüche, **dadurch gekennzeichnet, dass** die Zusammensetzung vor dem Abkühlen gerakelt oder auf andere Weise in eine flächige Form gebracht ist.

8. Zusammensetzung nach einem der vorgehenden Ansprüche, **dadurch gekennzeichnet, dass** sie auf einer Trennfolie oder einem Trennpapier abgelegt ist.

9. Zusammensetzung nach einem der vorgehenden Ansprüche, **dadurch gekennzeichnet, dass** das Reaktivharz ausgewählt ist aus einer Gruppe enthaltend Epoxidharze, insbesondere Bisphenol A diglycidyl ether (DGEBA), Bisphenol F diglycidyl ether (DGEBF), Tetraglycidylmethylendianilin (TGMDA), triglycidyl-p-aminophenol (TGPAP) und Benzoxazinharze, insbesondere Bisphenol-A und Anilin basiertes 1,3-Benzoxazin, Bisphenol-F und Anilin-basiertes Benzoxazin, Cyanatester, insbesondere Dicyanatester des Bisphenol M, Bisphenol A und Bisphenol E, sowie Novolak-basierte Cyanatester oder deren Mischungen oder Derivate.

10. Zusammensetzung nach einem der vorgehenden Ansprüche, **dadurch gekennzeichnet, dass** der Thermoplast oder entsprechende thermoplastische Oligomere eine Molmasse Mn zwischen 1000 und 150.000 Da besitzt und vorzugsweise ausgewählt ist aus einer Gruppe enthaltend Polyphenoxy, Polysulfone, Polyethersulfone Polyacrylate, Polymethacrylate, Polyoxazoline, Polyvinylpyrrolidon oder andere substituierte Polyolefine, Polyethylenterephthalat, Poly-ε-caprolacton oder andere Polyester, Polyamid 12, Polyamid 10, Polyamid 612 oder andere Polyamide, Polybisphenol A carbonat, Polypropylencarbonat, Polyethylencarbonat oder andere Polycarbonate, Polyimide, Polyetherimide, oder deren Mischungen oder Derivaten daraus.

11. Zusammensetzung nach einem der vorgehenden Ansprüche, **dadurch gekennzeichnet, dass** der Härter für das Epoxid-basierte Reaktivharzsystem ausgewählt ist aus einer Gruppe enthaltend Dicyandiamid, 4,4'-Diaminodiphenylsulfon, 4,4'-Diaminodiphenylmethan, 4,4'-methylenebis-(2,6-diisopropyl)-anilin, 4,4'-methylenebis-(2,6-diethyl)-anilin, 3,3'-Diisopropyl-5,5'-dimethyl-4,4'-diaminodiphenylmethan, 4,4'-Methylene-bis (3-chloro-2,6-diethylanilin) oder deren Mischungen oder Derivaten daraus.

12. Zusammensetzung nach einem der vorgehenden Ansprüche, **dadurch gekennzeichnet, dass** flammhemmende Stoffe, Keramik-Partikel blähende Partikel oder andere funktionale Füllstoffe enthalten sind.

13. Verfahren zur Herstellung eines Produkts aus einer Zusammensetzung nach einem der vorgehenden Ansprüche, **dadurch gekennzeichnet, dass** aus der Zusammensetzung ein faserfreies, freistehend handhabbares Halbzeug hergestellt wird.

14. Verfahren nach Anspruch 13, **dadurch gekennzeichnet, dass** der Reaktivharz und der Thermoplast in einem temperierbaren Gefäß mit Rührern oder in einem Extruder, insbesondere einem Doppelschneckenextruder, gemischt werden und der Härter vor dem Extruderausgang zugefügt wird.

15. Verfahren nach Anspruch 14, **dadurch gekennzeichnet, dass** die Zusammensetzung mittels Spritzgießen oder Folienextrusion zu einer Folie verarbeitet wird.

16. Verfahren nach einem der Ansprüche 13 bis 15, **dadurch gekennzeichnet, dass** das aus der Zusammensetzung ein flächiges Halbzeug hergestellt wird, das vor dem Aushärten gelagert wird.

17. Verfahren nach Anspruch 16, **dadurch gekennzeichnet, dass** eine elektrische Schaltung und/oder ein Sensor auf dem Halbzeug aufgebracht ist.

18. Verfahren nach einem der Ansprüche 13 bis 17, **dadurch gekennzeichnet, dass** mehrere Lagen vor dem Aushärten übereinandergelegt werden.

19. Verfahren nach Anspruch 18, **dadurch gekennzeichnet, dass** zwischen wenigstens zwei der übereinandergelegten Lagen jeweils eine reine, trockene Faserlage angeordnet ist.

20. Verfahren nach einem der Ansprüche 13 bis 19, **dadurch gekennzeichnet, dass** das flächige Halbzeug als Oberflächenfolie auf ein Prepreg aufgebracht wird.

21. Verfahren nach einem der Ansprüche 13 bis 20, **dadurch gekennzeichnet, dass** das Halbzeug eine Dicke im Bereich von 50µm bis 2 mm, vorzugsweise bis 0,5mm und höchst vorzugsweise bis 0,2 mm.

22. Ein bei 25°C festes, flächiges Halbzeug, **dadurch gekennzeichnet, dass** es aus einer Zusammensetzung nach einem der Ansprüche 1 bis 12 hergestellt ist.

23. Halbzeug nach Anspruch 22, **dadurch gekennzeichnet, dass** es faserfrei, freistehend handhabbar ist.
